# EUROPÄISCHE PATENTSCHRIFT

(11) **EP 2 678 935 B1**
(45) Veröffentlichungstag und Bekanntmachung des Hinweises auf die Patenterteilung: **30.04.2014**
(21) Anmeldenummer: 12710882.7
(22) Anmeldetag: 28.02.2012
(51) Int. Cl.: H02N 2/06, H02N 2/02, H02N 2/10

(54) **VERFAHREN ZUR ANSTEUERUNG EINES TRÄGHEITSANTRIEBS**
METHOD FOR CONTROLLING AN INERTIAL DRIVE
PROCÉDÉ DE COMMANDE D'UN ENTRAÎNEMENT PAR INERTIE

(30) Priorität: 14.03.2011 DE 102011013814; 27.02.2012 DE 102012202945
(43) Veröffentlichungstag der Anmeldung: 01.01.2014
(73) Patentinhaber: SmarAct Holding GmbH, 26135 Oldenburg (DE)
(72) Erfinder: RASS, Christoph, 26131 Oldenburg (DE); KORTSCHACK, Axel, 26125 Oldenburg (DE)
(74) Vertreter: Unland, Jochen Hermann
(86) Internationale Anmeldenummer: PCT/EP2012/053347
(87) Internationale Veröffentlichungsnummer: WO 2012/123251

(56) Entgegenhaltungen:
- EP-A1- 2 006 995
- WO-A1-2010/098138
- DE-A1- 4 237 509
- US-B1- 6 218 764

## Beschreibung

Die Erfindung betrifft ein Verfahren zur Ansteuerung eines Trägheitsantriebs auf der Basis von Impulsfolgen mit variabler Amplitude und/oder variabler Frequenz gemäß Patentanspruch 1.

Es ist bekannt, Trägheitsantriebe, z.B. Piezo-Slip-Stick-Antriebe mit elektrischen Signalen zu versorgen, welche nach Art einer Sägezahnspannung eine flache sowie eine steile Flanke besitzen.

Beim Anliegen der flachen Flanke nimmt der Reibkörper des Antriebs den sogenannten Slider mit. Ist die steile Flanke aktiv, kommt es zu einem Durchrutschen zwischen Reibkörper und Slider. Bei der nächsten flachen Flanke der Impulsfolge wird wiederum der Reibköper in die Lage versetzt, den Slider bewegungsmäßig mitzunehmen.

Es hat sich gezeigt, dass das gewünschte Durchrutschen zwischen Reibkörper und Slider nie vollständig gelingt. So wird der Slider immer ein Stück des Weges mit zurückgenommen, wobei die Größe dieses Stückes von der Kraft des Aktors, der Masse des Sliders sowie Elastizitäten im Material und äußeren Kräften abhängt.

Bei sehr kleinen Schritten wird die Wegstrecke, um die zurückbewegt wird, nicht nur in Relation zur Schrittgröße, sondern auch absolut größer, was zur Folge hat, dass eine Reduzierung der Schrittgröße zu einer Verstärkung unerwünschter Vibrationen des Antriebs führt.

Bei kleinen Amplituden der Sägezahnspannung ist die Rückwärtsbewegung bei der steilen Flanke sehr viel größer als der durchgeführte Schritt selbst. Sinkt die Amplitude unter einen Minimalwert, werden überhaupt keine verwertbaren Schritte des anzutreibenden Systems durchgeführt.

Demnach wird bei der Ansteuerung eines Slip-Stick-Antriebs mit einer üblichen bekannten Sägezahnspannung die Vibrationsamplitude bei kleinen Schrittweiten nicht von der Schrittweite selbst, sondern von der Weite des Zurückrutschens an der steilen Flanke des Impulses dominiert.

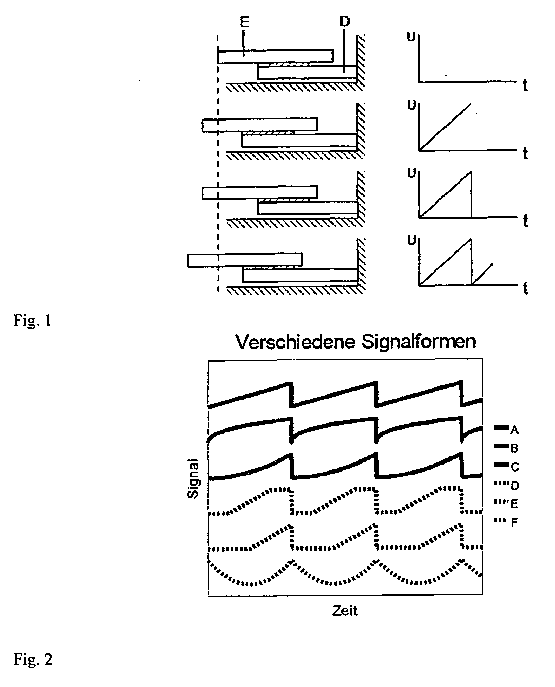

Fig. 1 lässt das Prinzip von Trägheitsantrieben erkennen. In solchen Antrieben ist ein Aktor (D) vorgesehen, der mit einem sägezahn-ähnlichen, periodischen Signal beaufschlagt wird und eine Beschleunigung relativ zu einem reibschlüssig mit dem Aktor verbundenen beweglich gelagerten Läufer (E) bewirkt. Bei einer niedrigen Beschleunigung des Aktors folgt der Läufer aufgrund des Reibschlusses dem Aktor. Bei einer hohen Beschleunigung des Aktors hingegen rutscht der Läufer relativ zum Aktor durch, sobald die Trägheitskraft des Läufers größer als die Reibungskraft zwischen Läufer und Aktor wird. Wenn mehrere Schritte durchgeführt werden, können makroskopische Bewegungen realisiert werden. Trägheitsantriebe stellen eine mechanisch einfache Möglichkeit dar, über größere Distanzen mit einer hohen Bewegungsauflösung zu positionieren.

Über die Richtung des Sägezahns kann die Bewegungsrichtung des Läufers vorgegeben werden.

Diese Antriebe haben den Nachteil, dass es aufgrund der Schritte immer wieder zu Vibrationen kommt, die für Präzisionsaufgaben stören sind.

Trägheitsantriebe können mit Signalen verschiedener Kurvenformen angesteuert werden. Wichtig ist es, dass einer Phase hoher Beschleunigung eine entgegengesetzte Phase mit geringer Beschleunigung folgt.

Eine sehr übliche Kurvenform ist in Fig. 2, Kurve A dargestellt. Dabei handelt es sich um einen klassischen Sägezahn mit abwechselnd flacher und steiler Flanke.

Die weiteren Kurvenformen B - F der Fig. 2 sind typische für Trägheitsantriebe verwendete Steuersignale. EP0823738 A2 zeigt zwei unterschiedliche Kurvenformen.

Weitere Antriebe und Signal sind aus US 6 218 764 B1 und WO 2010/098138 A1 bekannt.

Allen bekannten Ansteuersignalen ist gemein, dass sie beim Bewegen eines Objektes störende Vibrationen einkoppeln. Mit den bekannten Steuersignalen erzeugen auch kleine Schritte große Vibrationen.

Aus dem Vorgenannten ist es daher Aufgabe der Erfindung, ein weiterentwickeltes Verfahren zur Ansteuerung eines Trägheitsantriebs auf der Basis von z.B. sägezahnförmigen Impulsfolgen mit variabler Amplitude und/oder variabler Frequenz anzugeben, wobei äußerst kleine Sch-rittweiten im Bereich ≤5 nm realisiert werden können und wobei weiterhin unerwünschte Vibrationen des anzutreibenden Systems bzw. eines daran angekoppelten Objekts, z.B. eines nadelförmigen Objekts, minimierbar sind.

Die Lösung der Aufgabe der Erfindung erfolgt durch die Lehre gemäß Definition nach Patentanspruch 1, wobei die Unteransprüche mindestens zweckmäßige Ausgestaltungen und Weiterbildungen darstellen.

Grundsätzlich wird erfindungsgemäß zur Reduzierung der Vibrationsamplitude das Signal der Ansteuerimpulsfolge zu Impulsen mit Impulspausen verändert.

Während der Impulspausen muss nicht zwangsweise ein unveränderliches Signal anliegen. So ist es z.B. durchaus möglich, ein kontinuierlich veränderliches Signal anzulegen, um eine kontinuierliche Bewegung des Antriebs zu erzielen. Es ist auch möglich, situationsabhängige Kurven anzulegen, so dass während der Pulsdauer gewünschte Bewegungen erzielt werden können.

Die Dauer des erfindungsgemäß verkürzten Steuerimpulses ist so kurz, dass sie wesentlich unter der Periodendauer der Eigenschwingungen des anzutreibenden Systems liegt.

Werden zum Beispiel angelehnt an klassische für Trägheitsantriebe verwendete Sägezahnsignale zur Ansteuerung herangezogen, besteht der einzelne Sägezahnimpuls der Impulsfolge nicht nur aus einer langsamen und einer schnellen Fklanke, sondern aus einer Folge einer langsamen Flanke, einer schnellen Flanke und einer langsamen Flanke im Sinne eines verkürzten Sägezahnimpulses. Die Definition der langsamen Flanke ist so zu verstehen, dass kein Durchrutschen zwischen Läufer und Reibkörper ausgelöst wird. Dabei kann die langsame Flanke bis in den einstelligen Mikrosekundenbereich hinein, oder sogar darunter, verkürzt werden.

Da die Dauer des erfindungsgemäßen Steuerimpulses unter der Periodendauer der Eigenschwingung des anzutreibenden Systems liegt, kann der Läufer dem Sägezahn nicht mehr folgen. Aufgrund immer vorhandener Materialelastizitäten wird jedoch ein Bewegungsschritt durchgeführt. Die Größe des Schrittes ist geringer, als sie sich für wesentlich langsamere Impulse gleicher Amplitude ergeben würde. Für den Läufer wirkt der Schritt wie ein spontaner Sprung auf eine andere Position, so dass er mit einer typischen Sprungantwort reagiert, wobei die Amplitude der Schwingung hierbei nahezu linear von der Weite des Sprungs selbst abhängt. Die Dauer eines verkürzen Impulses kann dann für den weiteren Betrieb konstant gehalten werden, wobei die Schrittfrequenz durch die Länge der Pause zwischen den Schritten bestimmt wird. Es ist aber nicht ausgeschlossen, die Schrittdauer an Betriebsverhältnisse dynamisch anzupassen.

Der Vergleich zwischen klassischen Impulsfolgen mit verkürzten Impulsen zeigt, dass die Amplitude der Vibration beim klassischen Impulsfolgen bei kleiner werdender Schrittweite zunimmt. Bei verkürztem Steuerimpuls hingegen nimmt die Vibration linear mit der Schrittweite ab, so dass der verkürzte Impuls insbesondere für die aufgabengemäß zu erzielenden kleinen Schrittweiten geeignet ist.

Es sei betont, dass das Prinzip der verkürzten Impulsfolgen nicht nur auf die klassischen Sägezähne zur Ansteuerung von Trägheitsantrieben, sondern auch auf alle anderen zur Ansteuerung von Trägheitsantrieben geeigneten Kurvenformen, wie z.B. parabolische Kurvenformen angewendet werden kann.

Darüber hinaus können auch extreme Ausprägungen einer Folge von langsamen Flanken und schnellen Flanken in Form eines Rechtecksignals gewählt werden. Also Kurvenformen, die mit klassischen Stick-Slip-Trägheitsantrieben nicht zu vereinbaren sind, da sich ein wesentlicher Bewegungsabschnitt während der Bewegungsrichtungsumkehr des Aktors nicht aus einer Folge von Haftung und Durchrutschen (Stick-Slip), sondern einer Folge von in unterschiedliche Richtungen rutschende Bewegung ergibt. Wichtig ist auch dabei, dass die Dauer des erfindungsgemäßen Steuerimpulses so kurz ist, dass sie wesentlich unter der Periodendauer der Eigenschwingungen des anzutreibenden Systems liegt.

In der folgenden Beschreibung werden die Zusammenhänge der Einfachheit halber anhand eines Sägezahn erläutert. Die verkürzten Steuerimpulse können auch auf alle anderen für Trägheitsantriebe geeigneten Kurvenformen und weitere Kurvenformen, die eine Folge langsamer und schneller Flanken ausweisen, angewandt werden.

An dieser Stelle kurz zusammengefasst wird erfindungsgemäß zwischen den Einzelimpulsen eine Impulspause vorgesehen, wobei die Pulsdauer kürzer als die Periodendauer der Eigenschwingung des anzutreibenden Systems gewählt wird.

Wird die Dauer der Steuerimpulse konstant gehalten, kann die Schrittfrequenz des Antriebs durch die variable Länge der Impulspausen bestimmt werden.

Für den Fall einer Verwendung des Sägezahns, ergibt sich ein vorzugsweise zu verwendender Impuls der Impulsfolge aus einer Folge mit langsam ansteigender, schnell fallender und wiederum langsam ansteigender Flanke. Soll der Antrieb in die entgegengesetzte Richtung fahren, so müssen die Bewegungsrichtungen der Flanken umgekehrt werden.

Amplitudenwerte können zum Konstanthalten der Schrittweite entsprechend nachgeregelt werden. Zum Erhalt der kleinen Schrittweiten wird erfindungsgemäß eine dynamische Amplitudenregelung vorgenommen.

Aufgrund des neuartigen, linearen Zusammenhangs zwischen Vibration und Schrittweite, bzw. Amplitude, können nun sehr kleine Schritte, bis runter zur Minimalamplitude, bei der noch Schritte durchgeführt werden, technisch sinnvoll genutzt werden. Fällt die Schrittweite geringer aus als die Sollschrittweite, so kann durch eine Amplitudenerhöhung die Schrittweite erhöht werden. Fällt die Schrittweite zu groß aus, so wird die Amplitude etwas reduziert. In der Nähe der Minimalampliduden ist der Trägheitsantrieb sehr empfindlich gegenüber Einflüssen, wie z.B. externe Kräfte, Kraftschwankungen aufgrund von Fertigungsungenauigkeiten etc. Daher ist ein Regelkreis für den Betrieb in der Nähe der Minimalamplituden sehr vorteilhaft.

Ein schneller Regelkreis verhindert ein Festfahren des Antriebs. Liegt die Schrittweite aufgrund geringer Steueramplituden bei Null, so muss die Spannung erhöht werden, bis sich der Läufer wieder bewegt (losbricht). Wird die Spannung langsam erhöht, so ist die endgültige Spannung bei der sich der Antrieb losbricht hoch - der Antrieb hat sich festgefressen. In Folge dessen macht der Antrieb auch nach dem Losbrechen zunächst einen verhältnismäßig großen Schritt. Wird jedoch zügig über einen Regelkreis reagiert, so muss keine hohe Losbrechspannung überwunden werden. Damit sind alle Schrittweiten bis Null nutzbar.

Ein solcher Regelkreis erlaubt es also sehr keine Schritte mit dem Antrieb durchzuführen, die sich linear mit der Steueramplitude verändern. Eine Hysterese, die ohne Regelkreis auftritt und eine hochauflösende Bewegung unmöglich macht, kann verhindert werden.

Die Geschwindigkeit des Antriebs ist über das Produkt aus Schrittfrequenz und Schrittweite einstellbar, wobei Bereiche mit erwarteter starker Vibration des anzutreibenden Systems durch die Wahl der Schrittweite ausgeblendet werden.

Der neuartige proportionale Zusammenhangs zwischen der Schrittweite, ausgelöst über den erfindungsgemäßen Steuerimpuls, und der Größe der resultierenden Vibration bei kleinen Schritten macht diesen Ansatz sinnvoll, da anders als bisher üblich bei kleinen Schritten keine störenden Vibrationen mehr auftreten. Mit der Verwendung des erfindungsgemäßen Steuerimpulses kann eine deutlich geringere Vibration erzeugt werden, wenn für langsame Geschwindigkeiten kleine Schritte mit einer passenden Frequenz gewählt werden. Bei der Ansteuerung über traditionelle Steuersignale wäre die Wahl kleiner Schrittweiten qualitativ sogar nachteilig.

Mechanische Eigenschaften des anzutreibenden Systems einschließlich des angekoppelten Objektes können über eine Impulsasymmetrie bei den jeweiligen zur Ansteuerung benutzten Impulsfolgen kompensiert werden. Es hat sich gezeigt, dass bei schnellen Schritten die üblicherweise vorhandene Verstärkerelektronik, Aktorik und Mechanik des Antriebs diesen nicht perfekt folgen können, was die Symmetrie des Schrittsignals so, wie es mechanisch auf den Reibkontakt wirkt, verfälscht. Eine Abweichung von dieser Symmetrie hat jedoch eine Vergrößerung der Vibrationsamplitude zur Folge. Diesem Effekt wird erfindungsgemäß durch das gezielte Einbringen einer Asymmetrie bei der Ansteuerung entgegengewirkt. Diese Kompensation kann statisch erfolgen, da die innerhalb des Systems auftretenden Verfälschungen bei jedem Schritt nahezu identisch sind.

Bei einer Richtungsumkehr fallen bei konstanter Amplitude der Impulsfolge die ersten Schritte in die jeweils neue Richtung wesentlich größer aus im Vergleich zu dem Fall, wenn bereits länger in diese (neue) Richtung bewegt wurde.

Die Schrittweite baut sich nach und nach ab, bis wieder die gleiche Schrittweite wie vor der Richtungsumkehr erreicht wird.

Durch Anpassung der für die Schritte verwendeten Amplitude kann dieser unerwünschte Effekt kompensiert werden. Bei einer Richtungsumkehr wird die Amplitude reduziert. Nach und nach wird die Amplitude dann wieder auf den ursprünglichen Wert angepasst. Diese Kompensation kann vorausschauend erfolgen, da der genannte Effekt bei jeder Richtungsumkehr im Wesentlichen identisch auftritt.

Die einzustellende Amplitude der Steuersignale ist frequenzabhängig. Das heißt, es gibt eine Abhängigkeit von den Eigenresonanzfrequenzen des Positionierers, die sich in ausgeprägten Anhebungen und Absenkungen der Steueramplitude zeigen, die notwendig ist, um den Läufer mit konstanten Schrittweiten voranzutreiben. Die Eigenresonanzfrequenzen werden vom Einbau bzw. der Einbaulage des Positionierers im Gesamtsystem beeinflusst und variieren von Gerät zu Gerät.

Diese Frequenzabhängigkeit kann im Rahmen einer Kalibrierprozedur mit Hilfe eines Positionssensors aufgenommen, gespeichert und entsprechend kompensiert werden. Das ermöglicht die Steuerspannungen und Frequenzen gezielt aufeinander abzustimmen, so dass auch ohne einen erfindungsgemäß integrierten Wegsensor die Schrittweiten beim Durchfahren der Frequenzen konstant bleiben.

Wenn erfindungsgemäß eine Amplitudennachregelung erfolgt, derart, dass die Schrittweite konstant bleibt, so werden kleinere Schrittweiten technisch nutzbar. Von außen einwirkende Kräfte und interne Kraftschwankungen werden durch den Amplitudenregelkreis ausgeglichen. Der Regler ist dabei so gestaltet, dass ein Festfahren des Antriebs verhindert wird.

Bekanntermaßen ergibt sich die Geschwindigkeit eines Trägheitsantriebs als das Produkt aus Schrittfrequenz und Schrittweite, wobei die Schrittweite abhängig von der Amplitude der ansteuernden Impulsfolge ist. Es gibt demnach verschiedene Kombinationen von Schrittfrequenz und Schrittweite, um die gewünschte Geschwindigkeit zu erreichen.

Bekannte Regelkreise nutzen entweder eine konstante, häufig maximale Amplitude oder verwenden unterschiedliche Amplituden für verschiedene Geschwindigkeitsbereiche.

Um gewünschte kleine Schrittweiten zu realisieren, ist eine neuartige Steuerung der Schrittfrequenz und Schrittweite vorgesehen. Hier gilt es, die Amplitude derart einzustellen, dass Bereiche vermieden werden, bei denen Schritte mit einer Frequenz unterhalb der Resonanzfrequenz des Positionierers Vibrationen auslösen. Die Amplituden dieser störenden Vibrationen steigt mit zunehmender Schrittweite. Schrittfrequenzen weit oberhalb der Resonanzfrequenz des Positionierer lösen jedoch geringe Vibrationen aus.

Erfindungsgemäß wird im Unterschied zum Stand der Technik, welcher auf klassischen Regelungsansätzen basiert, der Bereich starker Vibrationen umfahren. Das heißt, dass die erfindungsgemäßen Steuerimpulse mit kleiner Amplitude gewählt werden, wenn sich der Antrieb langsam bewegen soll. Je schneller die Bewegung sein soll, desto höher die Frequenz. Wenn die Frequenz einen Wert deutlich oberhalb der Resonanzfrequenz erreicht hat, wird die Amplitude erhöht. Es kann wahlweise die Amplitude oder auch die Frequenz und Amplitude zusammen erhöht werden. Dabei ist es möglich weiterhin die verkürzten Schritte zu verwenden, es ist aber auch möglich im schnellen Bereich auf übliche Ansteuersignale, z.B. Ansteuersignale von bekannten Trägheitsantrieben, zu wechseln.

Ist eine langsame, kontinuierliche Bewegung des Antriebs zu erzielen, können Scanbewegung und Schrittbewegung überlagert werden. Die Scanbewegung ergibt sich aus einer quasi-statischen, im Vergleich zu den Flanken des Schrittes langsam veränderlichen, Ansteuerung. Die Überlagerung kann so realisiert werden, dass ein Schritt durchgeführt wird, sobald die Scanbewegung einen Schwellwert erreicht hat. Nach dem Schritt liegt die am Aktor anliegende Spannung wieder so, dass von Neuem gescannt werden kann.

Die erfindungsgemäß verkürzten Impulse für die Ansteuerung der Aktoren können an einen einzelnen Aktor angelegt werden der einen Läufer, auch Slider genannt, vorantreibt.

Es ist auch möglich, dass mehrere Aktoren zusammen einen Läufer antrieben, z.B. wenn der Läufer mit einer größeren Kraft anzutreiben ist als es ein einzelner Aktor in der Lage ist.

Dabei ist es möglich die Signale der verschiedenen Aktoren zu synchronisieren. Eine Variante wäre, dass alle Aktoren zur gleichen Zeit die gleichen Steuersignale angelegt bekommen, eine weitere Variante ist ein zeitversetztes Ansteuern der verschiedenen Aktoren mit jeweils erfindungsgemäß verkürzten Impulsen. Die letzte beschriebene Variante hat den Vorteil, dass ein solches Positioniersystem eine besonders gleichmäßige und kräftige Bewegung des Läufers ermöglicht. Aufgrund der Elastizitäten in den einzelnen Aktoren und der Mechanik ist es möglich die Aktoren zeitversetzt auf den Läufer einwirken zu lassen, ohne dass sich für eine gleichmäßige Bewegung zu hohe mechanische Spannungen zwischen den Reibflächen der einzelnen Aktoren und dem Läufer aufbauen.

Die Antriebe können mit dem erfindungsgemäß kurzen Steuersignal sehr viel kleinere Schritte mit geringer Vibration durchführen als bisher üblich. Das erlaubt es auch langsame Geschwindigkeiten mit einer hohen Schrittfrequenz zu fahren, wenn die Schritte klein genug gewählt werden. So ist es z.B. möglich eine hohe Bandbreite an Geschwindigkeiten zu fahren, wobei die Schrittfrequenz ständig oberhalb des hörbaren Bereichs liegen. Das ergibt ein geräuschloses Fahren der Antriebe.

Sollten die Geschwindigkeiten im hochfrequenten Bereich noch zu hoch für einen Anwendung sein, so kann dann auch die Frequenz reduziert werden. In der Regel ergeben sich dabei keine störenden Geräuschpegel, da die Antriebe dann mit sehr kleinen Amplituden angesteuert werden können und aufgrund der erfindungsmäßigen kurzen Schrittimpulse sehr geringe geräuscherzeugende Vibrationen auftreten.

Die Erfindung soll nachstehend anhand eines Ausführungsbeispiels sowie unter Zuhilfenahme von Figuren näher erläutert werden.

Hierbei zeigen:
Fig. 1: Prinzipskizze eines bekannten Trägheitsantriebs mit entsprechender, typischer Sägezahnansteuerung;
Fig. 2: beispielhafte, bekannte Signalformen zur Ansteuerung von Trägheitsantrieben;
Fig. 3a: vereinfachte Darstellung eines linearen Trägheitsantriebs;
Fig. 3b: vereinfachte Darstellung eines rotatorischen Trägheitsantriebs;
Fig. 4: eine typische Bewegung von Reibkörper und Läufer bei einer Ansteuerung mit beispielhaft sägezahnförmigen Impulsen gemäß Stand der Technik;
Fig. 5a: eine vergleichende Darstellung eines üblichen Sägezahnimpulses mit einem erfindungsgemäß verkürzten Sägezahn mit einer Pulsdauer, die kürzer ist als die Periodendauer der Eigenschwingung des Systems;
Fig 5b: eine vergleichende Darstellung eines üblichen parabolischen Ansteuersignals mit einem erfindungsgemäß verkürzten parabolischen Schrittimpuls mit einer Pulsdauer, die kürzer ist als die Periodendauer der Eigenschwingung des Systems;
Fig. 6a: eine vereinfachte Skizze des Versuchsaufbaus zur Vermessung der Vibrationen direkt am Läufer und an einem, schwingungstechnisch ungünstig, elastisch aufgehängten Referenzobjekt;
Fig. 6b: eine vergleichende Darstellung zwischen den Vibrationen, ausgelöst durch einen 20nm-Schritt mit einem klassischen Sägezahn (obere beiden Kurven) und einem beispielhaften erfindungsgemäßen verkürzten Sägezahnimpulses (untere Kurven);
Fig. 6c: eine vergleichende Darstellung zwischen den Vibrationen, ausgelöst durch einen 100nm-Schritt mit einem klassischen parabolischen Signalform (obere beiden Kurven) und einer beispielhaften erfindungsgemäß verkürzten parabolischen Impulsfolge (untere Kurven);
Fig. 7: eine Sprungantwort als Reaktion des anzutreibenden Systems auf einen beispielhaften erfindungsgemäß verkürzten Sägezahnimpuls im Vergleich realer zu idealer Sprungantwort;
Fig. 8: eine vergleichende Darstellung der Vibration des Antriebes bei der Ansteuerung über einen klassischen Sägezahn mit den auftretenden Vibrationen bei dem erfindungsgemäßen verkürzten Sägezahnimpuls;
Fig. 9: eine vergleichende Darstellung des Verhaltens von Schrittweite zu Amplitude im Bereich kleiner Schritte wenn sich ein Positionierer aufgrund einer fehlenden Regelung festfährt (schwarze Pfeile - bilden einen Hysterese) zu dem Verhalten wenn ein Festfahren über eine Amplitudenregelung verhindert wird (schwarz-grauer Pfeil - einfacher linearer Zusammenhang);
Fig. 10: eine Darstellung eines ausgeblendeten (schattiert dargestellten) Bereichs starker Vibrationen bei entsprechend gewählter Schrittweite und Schrittfrequenz;
Fig. 11a: eine vergleichende Darstellung zwischen einem beispielhaften, symmetrischen, erfindungsgemäßen verkürzten Sägezahnimpuls, zu zwei beispielhaften, ebenfalls erfindungsgemäß verkürzten Sägezahnimpulsen mit Asymmetrie;
Fig. 11b: eine vergleichende Darstellung zwischen einem beispielhaften, erfindungsgemäßen kurzen Rechtecksignal, zu zwei beispielhaften, ebenfalls erfindungsgemäß kurzen Rechtecksignalen mit Asymmetrie;
Fig. 12: eine Darstellung einer überlagerten Scanbewegung mit den erfindungsgemäß verkürzten beispielhaften Sägezähnen und
Fig. 13: eine zeitversetzte Ansteuerung von mehreren Piezoaktoren über beispielhafte erfindungsgemäße verkürzte Sägezähne.
Fig. 1 zeigt eine Prinzipskizze eines Trägheitsantriebs mit entsprechender, typischer Sägezahnansteuerung. In solchen Antrieben ist ein Aktor (D) vorgesehen, der mit einem sägezahn-ähnlichen, periodischen Signal beaufschlagt wird und eine Beschleunigung relativ zu einem reibschlüssig mit dem Aktor verbundenen beweglich gelagerten Läufer (E) bewirkt.
Fig. 2 zeigt eine Auswahl an typischen Signalformen die für Trägheitsantriebe herangezogen werden. Wichtiges Kriterium ist, dass sich immer eine Phase mit hoher Beschleunigung mit einer Phase geringer Beschleunigung abwechselt.

Kurve A: klassischer Sägezahn
Kurve B: exponentielle Impulsfolge
Kurve C: parabolische Impulsfolge mit Sprung
Kurve D: Sägezähne mit Pausen
Kurve E: Sägezahnfolge mit Pausen zwischen den Sägezähnen
Kurve F: parabolischen Kurve.

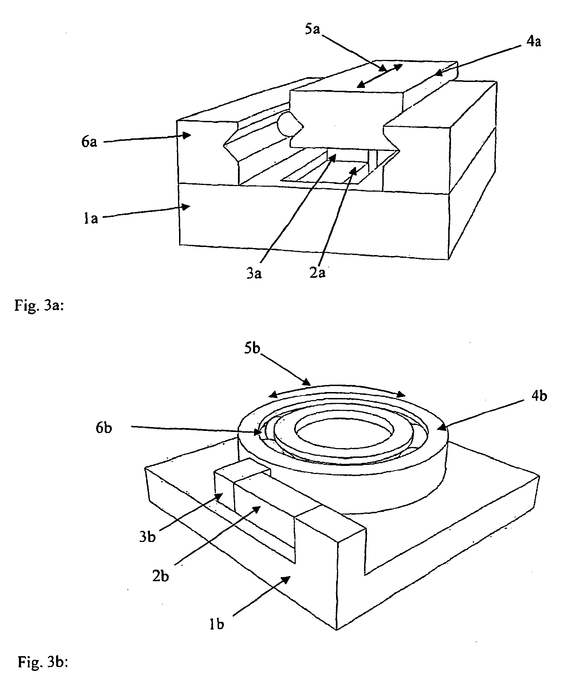

Fig. 3a zeigt einen vereinfachten linearen Trägheitsantrieb. Dargestellt sind die typischen Komponenten. Dabei handelt es sich um den Träger (1a) einem am Träger befestigen und durch die Sägezähne anzusteuernden Aktor (2a), und der an dem Aktor befindliche Reibfläche (3a). Die Reibfläche (3a) steht mit dem Läufer (4a) im ständigen Reibkontakt. Durch eine geeignete Ansteuerung des Aktors (2a) kann der Läufer entlang der Richtung (5a) bewegt werden. In dieser Abbildung wird der Läufer (4a) durch eine Führung (6a) geführt.

Fig. 3b zeigt einen vereinfachten rotatorischen Trägheitsantrieb. Dargestellt sind die typischen Komponenten. Dabei handelt es sich um den Träger (1b) einem am Träger befestigen und durch die Sägezähne anzusteuernden Aktor (2b), und der an dem Aktor befindliche Reibfläche (3b). Die Reibfläche (3b) steht mit dem Läufer (4b) im ständigen Reibkontakt. Durch eine geeignete Ansteuerung des Aktors (2b) kann der Läufer entlang der Richtung (5b) bewegt werden. In dieser Abbildung wird der Läufer (4b) durch eine Lager (6b) rotatorisch geführt.

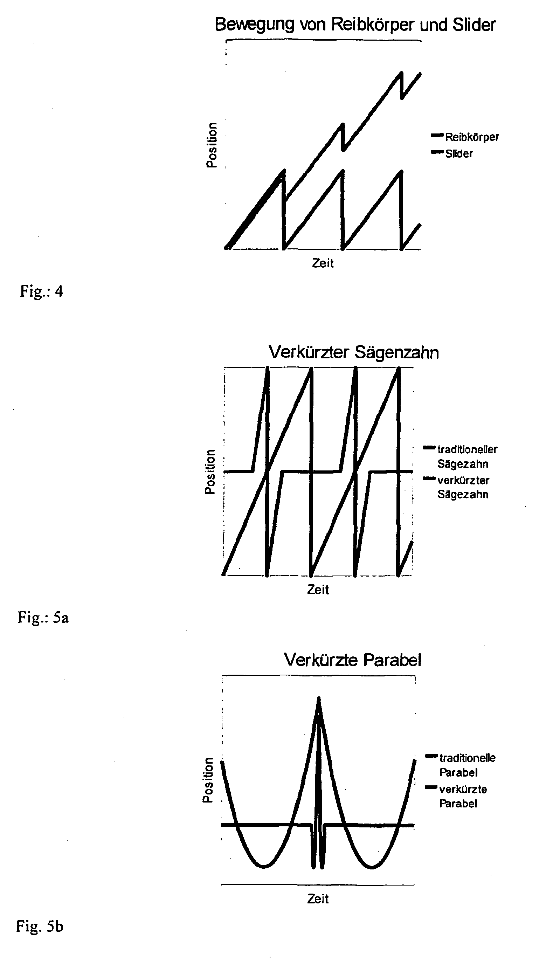

Die Darstellung nach Fig. 4 lässt erkennen, wie ein Reibkörper (dunkel liniert) einen Läufer (helle Linie) mitnimmt. Bei der ansteigenden flachen Flanke erfolgt das gewünschte Mitnehmen des Läufers. Bei der steilen, abfallenden Flanke kommt es zum Durchrutschen zwischen Reibkörper und und Läufer, wobei dies nicht vollständig geschieht. Vielmehr wird der Läufer immer ein Stück mit zurückgezogen. Bei gewünschten kleinen Schritten wird die Strecke, um die die unerwünschte Zurückbewegung erfolgt, nicht nur in Relation zur Schrittgröße, sondern auch absolut größer, was zur Folge hat, dass eine Reduzierung der Schrittgröße zu einer Verstärkung unerwünschter Vibrationen des angetriebenen Objektes führt.

Die Fig. 5a illustriert den Vergleich eines traditionellen Sägezahnimpulses (dunkle Kurvenform) zu einem beispielhaften erfindungsgemäß verkürzten Sägezahnimpuls (helle Kurvenform). Um beide Kurven in einem Diagramm abbilden zu können, sind die Unterschiede in der Impulsdauer reduziert dargestellt. Zur Reduzierung der Vibrationsamplitude wird das Ansteuersignal zu Sägezähnen mit Pause verändert und die Dauer des verkürzten Sägezahnimpulses wird so weit reduziert, dass sie wesentlich unter der Periodendauer der Eigenschwingungen des Positionierers liegt. Dabei können sich die Pulsdauern vom traditionellen Sägezahn und erfindungsgemäß verkürzten Sägezahn durchaus um mehrere Größenordnungen unterscheiden.

Die Fig. 5b illustriert den Vergleich eines traditionellen parabolischen Signals zur Ansteuerung (dunkle Kurvenform) zu einer beispielhaften erfindungsgemäß verkürzten parabolischen Kurvenform (helle Kurvenform). Zur Reduzierung der Vibrationsamplitude wird das Ansteuersignal zu Impulsen mit Pause verändert und die Dauer des verkürzten Impulses wird so weit reduziert, dass sie wesentlich unter der Periodendauer der Eigenschwingungen des Positionierers liegt. Dabei können sich die Pulsdauern der traditionellen Kurvenform und dem erfindungsgemäß verkürzten Steuersignal durchaus um mehrere Größenordnungen unterscheiden.

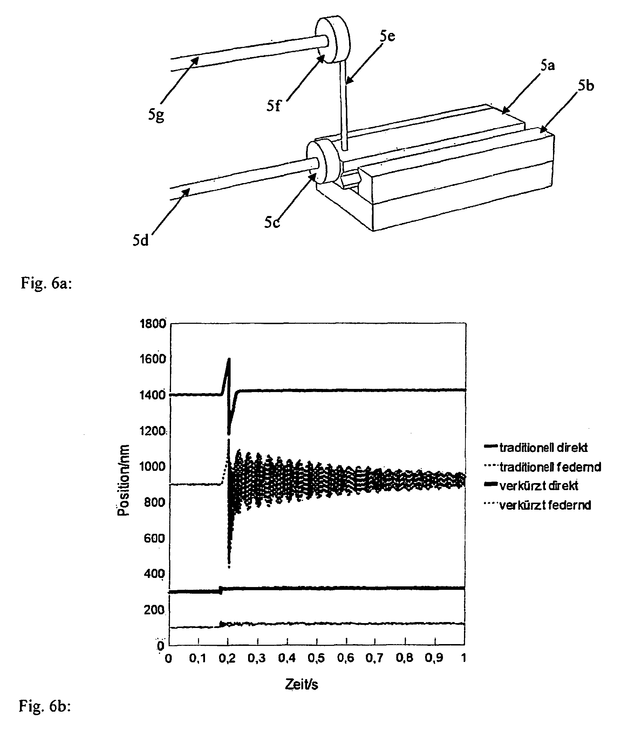

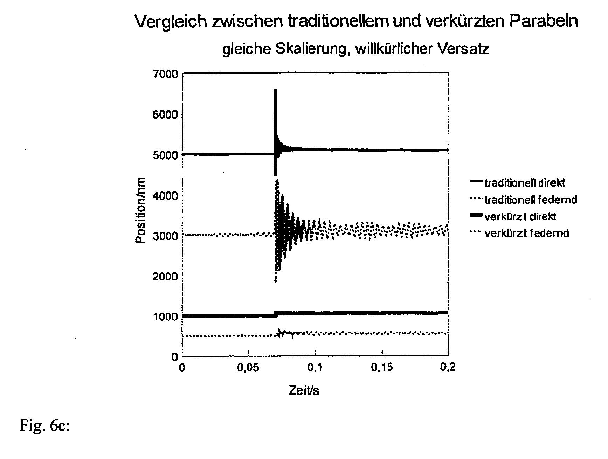

In Fig. 6a, Fig. 6b und Fig. 6c wird anhand beispielhafter Messungen an einem Trägheitsantrieb die Wirkung der erfindungsgemäßen verkürzten Impulsfolgen durch einen Vergleich zu einem traditionellen Sägezahnverlauf (Fig. 6b) und einem traditionellen parabolischen Signalverlauf (Fig. 6c) verdeutlicht. Um einen direkten Vergleich zu ermöglichen sind die Sägezahnverläufe und die parabolischen Verläufe für die Ansteuersignale traditionell gegen erfindungsgemäß verkürzt, direkt gegenüber gestellt.

Fig. 6a zeigt eine vereinfachte Skizze Ein in der Führung (5b) geführter Läufer (5a) wird mit einem Sägezahnsignal auf die Aktoren vorangetrieben. An dem Läufer (5a) ist ein kleiner Spiegel (5c) befestigt, dessen Position mit dem Laser (5d) eines Laserinterferometers überwacht wird.

Um die Wirkung der Schwingungen des Läufers (5a) auf ein Objekt zu zeigen, welches schwingungstechnisch ungünstig an den Läufer angekoppelt ist, wird ein weiterer Spiegel (5f) über einen dünnen Stab (5e) an dem Läufer (5a) befestigt. Da der Stab (5e) dünn ist und der Spiegel (5f) eine relativ hohe Masse ausweist, kann der Spiegel (5f) leicht zu Vibrationen angeregt werden. Die Bewegungen des Spiegels (5f) werden über einen zweiten Laserstrahls (5g) des Laserinterfrerometers überwacht.

Fig. 6b zeigt reale Messungen, die mit dem oben beschriebenen Versuchsaufbau ermittelt wurden.

Der Läufer wurde jeweils über Sägezähne zu einem Schritt in Höhe von 20nm angeregt.

Im Falle der oberen beiden Graphen ist ein traditioneller Sägezahn verwendet worden, im Falle der unteren beiden Graphen ein erfindungsgemäß verkürzter Sägezahnimpuls.

Der Graph ganz oben zeigt deutlich, dass der Schlitten nur einen ganz kleinen Anteil der durch den Aktor vollzogenen Bewegung in einen Schritt (20nm) umsetzt, der größte Teil ist lediglich ein Schwingen des Läufers in der Größenordung von 400nm.

Die Auswirkung der Schwingung des Läufers auf den Spiegel (5f) ist im zweiten Graphen von oben dargestellt. Hier ist ein Schwingen des Spiegels mit einer Amplitude von ca. 700nm zu beobachten mit einer anschließend langen Einschwingzeit mit deutlich erkennbarer Schwebung. Wäre statt der Spiegelkonstruktion (5e + 5f) z.B. eine Nadel verwendet worden um mit dieser auf der Nanoebene zu manipulieren, so wäre es bei solchen Vibrationen praktisch sehr schwer gewesen sich mit Schritten fein anzunähern.

Wie Fig. 6b entnommen werden kann, verhält sich die Situation im Falle der Ansteuerung über die erfindungsgemäßen Sägezahnimpulse anders.

Im dritten Graph von oben ist die gemessene Position direkt am Läufer (5a) dargestellt. Es ist ein 20nm Schritt zu sehen. Um ein eventuell vorhandenes Einschwingen zu beurteilen ist die Auflösung der Fig 5b nicht ausreichend, Es ist deutlich zu sehen, dass die Schwingungen weitaus geringer sind als bei einem Schritt über einen herkömmlichen Sägezahn. Gleiches gilt für die Schwingung des Spiegels (5f), dargestellt im untersten Graphen. Der 20nm-Schritt lässt sich erkennen mit einem anschließend sehr kleinen und schnellen Einschwingverhalten. Das Verhalten ist deutlich besser als bei der Verwendung eines herkömmlichen Sägezahns.

Mit einem solchen Positionierverhalten kann eine oben angesprochene Nadel sehr gut für Nanomanipulationen verwendet werden.

Fig. 6c zeigt reale Messungen, die mit dem oben beschriebenen Versuchsaufbau ermittelt wurden.

Der Läufer wurde jeweils über parabolische Signale zu einem Schritt in Höhe von 100nm angeregt.

Im Falle der oberen beiden Graphen ist ein übliches parabolisches Signal verwendet worden, im Falle der unteren beiden Graphen ein erfindungsgemäß verkürzter parabolischer Impuls.

Der Graph ganz oben zeigt deutlich, dass der Schlitten nur einen ganz kleinen Anteil der durch den Aktor vollzogenen Bewegung in einen Schritt (100nm) umsetzt, der größte Teil ist lediglich ein Schwingen des Läufers in der Größenordnung von mehreren Mikrometern.

Die Auswirkung der Schwingung des Läufers auf den Spiegel (5f) ist im zweiten Graphen von oben dargestellt. Hier ist ein Schwingen des Spiegels mit einer Amplitude von ebenfalls mehreren Mikrometern zu beobachten mit einer anschließend langen Einschwingzeit.

Wie Fig. 6c entnommen werden kann, verhält sich die Situation im Falle der Ansteuerung über die erfindungsgemäß verkürzten parabolischen Impulse anders.

Im dritten Graph von oben ist die gemessene Position direkt am Läufer (5a) dargestellt. Es ist ein 100nm Schritt zu sehen. Um ein eventuell vorhandenes Einschwingen zu beurteilen ist die Auflösung der Fig 6c nicht ausreichend. Es ist deutlich zu sehen, dass die Schwingungen weitaus geringer sind als bei dem mit einem üblichen parabolischen Signal angesteuerten Positionierer. Gleiches gilt für die Schwingung des Spiegels (5f), dargestellt im untersten Graphen. Der 100nm-Schritt lässt sich erkennen mit einem anschließend sehr kleinen und schnellen Einschwingverhalten. Das Verhalten ist wieder deutlich besser als bei der Verwendung eines herkömmlichen parabolischen Signals.

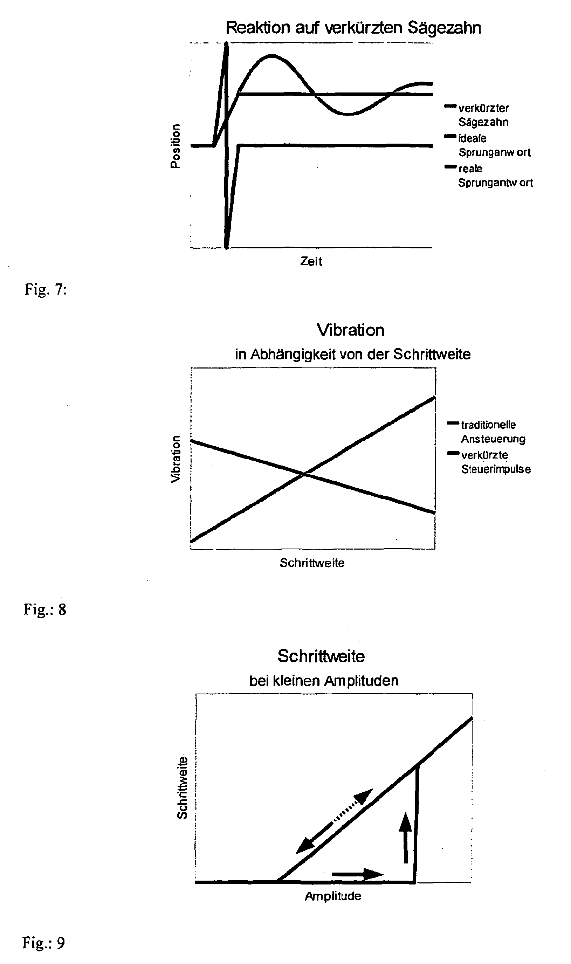

Die Fig. 7 illustriert die Reaktion des anzutreibenden Systems auf einen beispielhaften, erfindungsgemäß verkürzten Sägezahnimpuls. Die hellgraue Linie zeigt die reale Sprungantwort im Vergleich zur mittelgrauen Linie, die die ideale Sprungantwort repräsentiert.

Fig. 8 zeigt, dass die Vibrationen eines Trägheitsantriebes, angesteuert mit einem traditionellen Steuersignal, mit kleiner werdenden Schrittweiten größer werden (dunkle Linie), was die Nutzung sehr kleiner Schrittweiten technisch unbrauchbar macht.

Anders verhält es sich bei der Ansteuerung über die erfindungsgemäß verkürzten Steuerimpulse. Wie anhand der hellgrauen Linie zu erkennen ist, werden die Vibrationen mit kleiner werdenden Schrittweite auch kleiner, was kleine Schritte des Trägheitsantriebes technisch nutzbar macht.

Fig. 9 zeigt das typische Verhalten einen Trägheitsantriebs im Bereich der kleinst möglichen Schrittweiten - mit und ohne Amplitudenregelung.

Wird die Amplitude reduziert, so werden die Schrittweiten zunehmend kleiner, bis kein Schritt mehr durchgeführt wird. Werden die Amplituden dann wieder erhöht, so werden nicht sofort wieder Schritte durchgeführt, sondern die Amplitude muss solange erhöht werden, bis der Antrieb sprunghaft einen großen Schritt durchführt. Sobald ein solcher Schritt durchgeführt wurde, kann wieder durch Variation der Amplitude die Schrittweite gesteuert werden (schwarze Pfeile).

Im Falle der Amplitudenregelung kann die Schrittweite über die Amplitude durchgehend, bis runter zu einer Schrittweite von Null, im linearen Zusammenhang genutzt werden (Schwarz/grauer Pfeil), da über einen zügigen Regelkreis das oben beschriebene "Festfahren" verhindert wird. Zu der Hysteresenbildung kommt es nicht, so dass die kleinen Schritte technisch sinnvoll nutzbar sind.

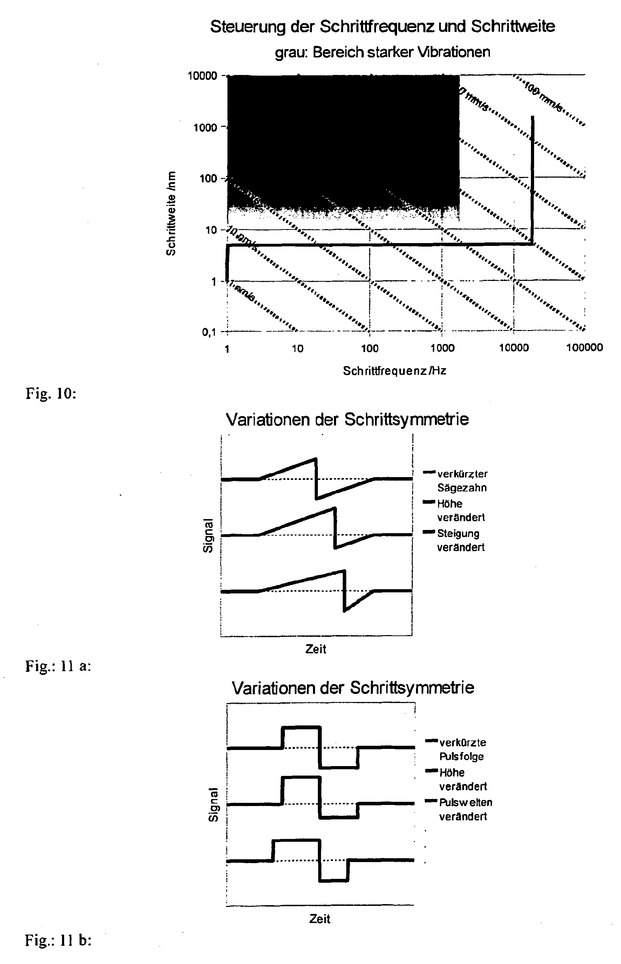

Anhand der Fig. 10 wird ersichtlich, wie für einen beispielhaften Positionierer durch die Wahl geeigneter Schrittweiten und Frequenzen Bereiche starker Vibrationen (grauer Bereich) ausgeblendet werden können. Die schwarze Linie stellt einen möglichen Reglerverlauf dar, der die Kombinationen von Schrittfrequenz und Schrittweite vermeidet die zu starken Vibrationen führen.

Fig. 11a zeigt drei beispielhafte erfindungsgemäße Sägezahnimpulse mit unterschiedlichen Symmetrien. Die oberste (dunkle Linie) zeigt ein symmetrischen Sägezahn. Die Flächen die von dem Sägezahn und der gepunkteten Linie umschlossen werden sind ober- und unterhalb des Mittelwerts des Steuersignals gleich.

In den beiden anderen Kurven ist die Flächen ober- und unterhalb des Mittelwerts unterschiedlich. Die Fläche oberhalb des Mittelwerts ist größer. Eine Asymmetrie in die andere Richtung (Fläche unterhalb des Mittelwerts ist größer) ließe sich auch erzeugen.

Gezeigt wird, dass sich die Asymmetrie durch verschiedene Methoden erzeugen lassen. Für den mittleren Fall (dunkel grau) wird die Asymmetrie über unterschiedliche Höhen der Amplitude eingestellt, während im untersten Fall (hellgrau) eine Asymmetrie über unterschiedlich steile Flanken erzeugt wird.

Über eine solche Asymmetrie kann ausgeglichen werden, dass die Verstärkerelektronik, Aktorik und die Mechanik einem schnellen Schritt nicht unbedingt perfekt folgen kann, was dann an der Reibstelle zu einem asymmetrischen Verhalten führt, was dann wiederum zu ungewollten Vibrationen führt.

Fig. 11b zeigt drei beispielhafte erfindungsgemäße Rechteckimpulsfolgen mit unterschiedlichen Symmetrien. Die oberste (dunkle Linie) zeigt eine symmetrische Rechteckimpulsfolge. Die Flächen, die von den Rechtecksignalen und der gepunkteten Linie umschlossen werden, sind ober- und unterhalb des Mittelwerts des Steuersignals gleich.

In den beiden anderen Kurven sind die Flächen ober- und unterhalb des Mittelwerts unterschiedlich. Die Fläche oberhalb des Mittelwerts ist größer. Eine Asymmetrie in die andere Richtung (Fläche unterhalb des Mittelwerts ist größer) ließe sich auch erzeugen.

Gezeigt wird, dass sich die Asymmetrie durch verschiedene Methoden erzeugen lässt. Für den mittleren Fall (dunkelgrau) wird die Asymmetrie über unterschiedliche Höhen der Amplitude eingestellt, während im untersten Fall (hellgrau) eine Asymmetrie über eine unterschiedlich lange Dauer zwischen den Rutschphasen erzeugt wird.

Über eine solche Asymmetrie kann der Fall ausgeglichen werden, dass die Verstärkerelektronik, Aktorik und die Mechanik einem schnellen Schritt nicht unbedingt perfekt folgen kann, was dann an der Reibstelle zu einem asymmetrischen Verhalten führt, was wiederum ungewollte Vibrationen erzeugt.

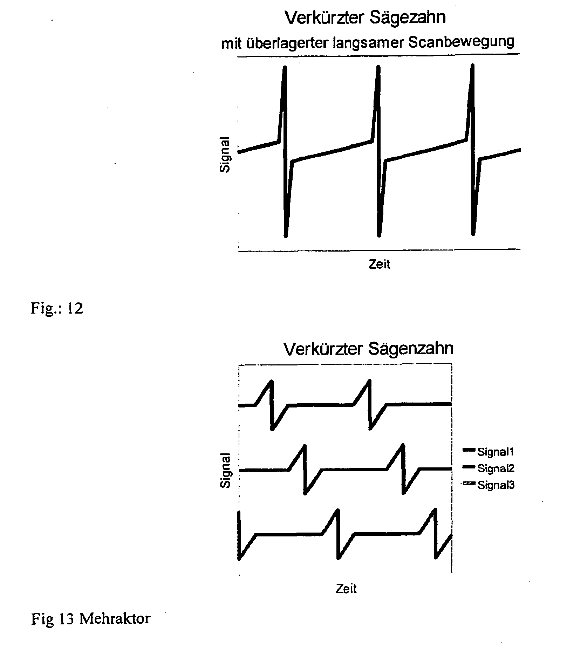

Fig. 12 zeigt eine Überlagerung einer Scanbewegung mit beispielhaften erfindungsgemäßen Sägezahnimpulsen. Zu erkennen ist eine langsam ansteigende Linie, unterbrochen durch Sägezahnimpulse. Eine solches Ansteuersignal erlaubt eine kontinuierliche Scanbewegung mit einem Läufer auszuführen.

Die Scanbewegung ergibt sich aus einer quasi-statischen, im Vergleich zu den Flanken des Schrittes langsam veränderlichen, Ansteuerung. Die Überlagerung kann so realisiert werden, dass ein Schritt durchgeführt wird, sobald die Scanbewegung einen Schwellwert erreicht hat. Nach dem Schritt ist die am Aktor anliegende Spannung wieder auf dem Niveau wie vor dem ersten Scan, so dass wieder neu gescannt werden kann. Indem diese Zyklen wiederholt durchgeführt werden, ist der mögliche Hub theoretisch unbegrenzt.

Fig. 13 zeigt beispielhafte, erfindungsgemäß verkürzte Sägezahnverläufe, mit denen ein Antrieb mit in diesem Fall drei Aktoren angesteuert werden kann. Die Sägezähne erfolgen mit der gleichen Frequenz, sind aber zeitlich versetzt, so dass nicht alle Aktoren gleichzeitig einen Schritt durchführen. Mit solchen Mehraktorantrieben können kräftige Aktoren mit einem sehr gleichmäßigen Laufverhalten realisiert werden.

## Patentansprüche

1. Verfahren zur Ansteuerung eines Trägheitsantriebs auf der Basis von Impulsfolgen mit Abschnitten unterschiedlicher Steigungen sowie mit variabler Amplitude und/oder variabler Frequenz,
wobei
zwischen den Einzelimpulsen der Impulsfolgen eine Impulspause vorhanden ist, wobei die Pulsdauer wesentlich kleiner als die Periodendauer der Eigenschwingungen des anzutreibenden Systems ist.

2. Verfahren nach Anspruch 1,
**dadurch gekennzeichnet, dass**
sich jeder Einzelimpuls aus einer Folge mit langsam ansteigender, schnell fallender und langsam ansteigender Flanke oder langsam fallender, schnell steigender und langsam fallender Flanke ergibt.

3. Verfahren nach Anspruch 1 oder 2,
**dadurch gekennzeichnet, dass**
die Dauer des Einzelimpulses konstant gehalten und die Schrittfrequenz des Antriebs durch die variable Länge von Impulspausen bestimmt wird.

4. Verfahren nach einem der vorangegangenen Ansprüche,
**dadurch gekennzeichnet, dass**
bei einem Richtungswechsel des Antriebs die Amplitudenwerte zur Kompensation sich ändernder Schrittweiten angepasst werden.

5. Verfahren nach einem der vorangegangenen Ansprüche,
**dadurch gekennzeichnet, dass**
die Amplitudenwerte zum Konstanthalten der Schrittweite nachgeregelt werden.

6. Verfahren nach Anspruch 5,
**dadurch gekennzeichnet, dass**
zum Erhalt von kleinen Schrittweiten im Bereich ≤5 nm eine dynamische Amplitudenregelung erfolgt.

7. Verfahren nach Anspruch 6,
**dadurch gekennzeichnet, dass**
die Geschwindigkeit des Antriebs über das Produkt aus Schrittfrequenz und-Schrittweite einstellbar ist{ wobei Bereiche mit erwarteter starker Vibration des anzutreibenden Systems ausgeblendet werden.

8. Verfahren nach einem der vorangegangenen Ansprüche,
**dadurch gekennzeichnet, dass**
mechanische und/oder elektrische Eigenschaften des anzutreibenden Systems über eine Impulsasymmetrie bei den jeweiligen zur Ansteuerung benutzten Impulsfolgen kompensierbar sind.

9. Verfahren nach einem der vorangegangenen Ansprüche,
**dadurch gekennzeichnet, dass**
frequenzabhängige Variationen in der Schrittweite durch Anpassungen der Steueramplituden korrigiert werden, wobei diese Anpassung sowohl vorausschauend über eine aufgenommene Messreihe als auch dynamisch korrigierbar ist.

10. Verfahren nach einem der vorangegangenen Ansprüche,
**dadurch gekennzeichnet, dass**
eine Überlagerung von langsamer Scanbewegung und schnellen Impulsen ein kontinuierliches Bewegen des Antriebs ermöglicht.

11. Verfahren nach einem der vorangegangenen Ansprüche,
**dadurch gekennzeichnet, dass**
je Antrieb mehr als ein Aktor eingesetzt wird, wobei die Aktoren wahlweise identisch oder zeitversetzt angesteuert werden können.

12. Verfahren nach einem der vorangegangenen Ansprüche,
**dadurch gekennzeichnet, dass**
die Pulsdauer eines Einzelimpulses kleiner als 50µs ist.

## Claims

1. A method for controlling an inertia drive, on the basis of pulse trains comprising sections of different gradients and having variable amplitude and/or frequency,
wherein
a pulse interval is provided between the individual pulses of the pulse trains, wherein the selected pulse duration is substantially less than the cycle duration of the natural oscillation of the system to be driven.

2. The method according to claim 1,
**characterised in that**
each individual pulse comprises a sequence with slowly rising, rapidly falling and slowing rising edge, or with slowly falling, rapidly rising and slowly falling edge.

3. The method according to claim 1 or 2,
**characterised in that**
the duration of the individual pulse is kept constant and the step frequency of the drive is determined by the variable length of pulse intervals.

4. The method according to any one of the preceding claims,
**characterised in that**
when the drive changes direction the amplitude values are adjusted to compensate for changing step sizes.

5. The method according to any one of the preceding claims,
**characterised in that**
the amplitude values are readjusted in order to keep the step size constant.

6. The method according to claim 5,
**characterised in that**
the amplitude is dynamically controlled in order to keep small step sizes in the range below 5 nm.

7. The method according to claim 6,
**characterised in that**
the speed of the drive can be set using the product of the step frequency and the step size, wherein regions in which the system to be driven is expected to vibrate strongly are filtered out.

8. The method according to any one of the preceding claims,
**characterised in that**
mechanical and/or electrical properties of the system to be driven can be compensated by pulse asymmetry in the respective pulse trains used for control.

9. The method according to any one of the preceding claims,
**characterised in that**
frequency-dependent variations in the step size are corrected by adjustments to the control amplitudes, wherein said adjustment can be corrected both anticipatively, using a recorded series of measurements, and dynamically.

10. The method according to any one of the preceding claims,
**characterised in that**
superimposing slow scanning motion and fast pulses allows continuous motion of the drive.

11. The method according to any one of the preceding claims,
**characterised in that**
more than one actuator is used per drive, wherein the actuators can be selectively controlled either identically or with a timing offset.

12. The method according to any one of the preceding claims,
**characterised in that**
the pulse duration of an individual pulse is less than 50 µs.

## Revendications

1. Procédé de commande d'un entraînement par inertie sur la base de séquences d'impulsions avec des segments de gradients différents ainsi qu'une amplitude variable et/ou une fréquence variable,
une pause d'impulsion étant prévue entre les différentes impulsions des séquences d'impulsions, la durée d'impulsion étant sélectionnée sensiblement inférieure à la durée périodique des oscillations propres du système à entraîner.

2. Procédé selon la revendication 1, **caractérisé en ce que**
chaque impulsion d'une séquence se présente avec un flanc de pente lentement ascendante, rapidement descendante et lentement ascendante, ou un flanc de pente lentement descendante, rapidement ascendante et lentement descendante.

3. Procédé selon la revendication 1 ou 2, **caractérisé en ce que**
la durée de l'impulsion est maintenue constante et la fréquence de pas de l'entraînement est déterminée par la longueur variable des pauses d'impulsion.

4. Procédé selon l'une des revendications précédentes, **caractérisé en ce que**
en cas de changement de sens de l'entraînement, les valeurs d'amplitude sont ajustées pour compenser la variation de pas.

5. Procédé selon l'une des revendications précédentes, **caractérisé en ce que**
les valeurs d'amplitude sont réajustées pour maintenir un pas constant.

6. Procédé selon la revendication 5, **caractérisé en ce que**
une régulation dynamique d'amplitude est appliquée pour obtenir des pas courts, ≤ 5 nm.

7. Procédé selon la revendication 6, **caractérisé en ce que**
la vitesse de l'entraînement est réglable par le produit de la fréquence et de la grandeur du pas, en annulant les plages où est attendue une vibration renforcée du système à entraîner.

8. Procédé selon l'une des revendications précédentes, **caractérisé en ce que**
des propriétés mécaniques et/ou électriques du système à entraîner peuvent être compensées par une asymétrie d'impulsions pour les séquences d'impulsions respectives utilisées pour la commande.

9. Procédé selon l'une des revendications précédentes, **caractérisé en ce que**
les variations de pas en fonction de la fréquence sont corrigées par ajustement des amplitudes de commande, cet ajustement pouvant être corrigé, par anticipation au moyen d'une série de mesures enregistrées ainsi que dynamiquement.

10. Procédé selon l'une des revendications précédentes, **caractérisé en ce que**
une superposition d'un mouvement de balayage lent et d'impulsions rapides permet un déplacement continu de l'entraînement.

11. Procédé selon l'une des revendications précédentes, **caractérisé en ce que**
plus d'un actionneur est mis en oeuvre par entraînement, les actionneurs pouvant en option être commandés de manière identique ou avec décalage temporel.

12. Procédé selon l'une des revendications précédentes, **caractérisé en ce que**
la durée d'impulsion d'une impulsion individuelle est inférieure à 50 µs.
